# EUROPEAN PATENT APPLICATION

(11) **EP 2 221 230 A1**
(43) Date of publication of application: **25.08.2010**
(21) Application number: 08858894.2
(22) Date of filing: 21.11.2008
(51) Int. Cl.: B62B 3/02

(54) **COLLAPSIBLE SHOPPING CART FOR TRANSPORTING SHOPPING FROM SHOP TO CAR AND FROM CAR TO HOME**

(30) Priority: 11.12.2007 ES 200702550 U
(71) Applicant: Ravnborg, Paul Fredy, 29650 Mijas (Malaga) (ES)
(72) Inventor: Ravnborg, Paul Fredy, 29650 Mijas (Malaga) (ES)
(74) Representative: Riera Blanco, Juan Carlos
(86) International application number: PCT/ES2008/000732
(87) International publication number: WO 2009/074699

(57) **Abstract**

The invention relates to a collapsible shopping cart for transporting shopping from the shop to the car and from the car to the home, said cart being formed by a structure (2) and a container (3) and comprising guiding bars (4) used for the rollers (5) of the container (3) and connected in an articulated (8) manner to lateral legs (9) provided with wheels (10), which, together with another central leg (11) also comprising a wheel (13) and connected to the lateral legs by a part (12) and to a longitudinal bar (17) arranged between the guiding bars (4), form the collapsible support. The shopping cart according to the invention comprises ramps (6) for coupling to the ends of the guiding bars (4) and facilitating the positioning and removal of the container (3). Said shopping cart comprises a hook (7), and a system for braking the wheels (5) in order to hold the container (3) still. The central leg (11) is connected to the bar (17) by a sliding piece (19) comprising notches (20) which fix the part in pre-determined positions.

## Description

The invention, as expressed by the present descriptive memory, refers to a collapsible cart, applicable for transporting shopping from the shop to the car and from the car to home, lending various and innovative characteristics to its function, which will be described in detail herein.

More precisely, the object of the invention consists of a collapsible cart, designed especially for use by consumers who go shopping by car, generally to hypermarkets or similar shopping areas, allowing the comfortable transportation of shopping from the point of sale to the vehicle and afterwards, once home, to continue the comfortable transportation of the shopping into the house.

### BACKGROUND OF THE INVENTION

The increase in the social tendency of shopping at large hypermarkets, where consumers generally have to drive to get there in their own vehicle is well known, and where they tend to load a large quantity of products of all kinds in order to meet their families' needs.

Logically, as said centres tend to be on the outskirts of city centres, as well as having to get to them by car, an important amount of time is invested in order to do the shopping in the acquisition of products for various days, which means that the volume of said products is normally quite considerable, as well as their weight.

Even though most of these centres are provided with shopping trolleys, which via the insertion of a coin, can be used for loading the purchased products and taking them comfortably to the car, the problem arises once we get home, when we find we must undertake the mission of carrying the weight of a lot of small shopping bags in order to transport the purchases we have made from the car to the inside of our home, which, in certain cases, may cover a great distance, thus making this an operation requiring great effort for one or two people, which may become nearly impossible for certain people capable of less physical strength, such as those who are older, handicapped, etc.

The creation of a shopping cart, which as well as allowing us to comfortably carry our shopping within the hypermarket or shop, with the advantage of not having to look for a trolley at a certain point of the car park, and without the need of a coin in order to use it would therefore be desirable, and would allow us to easily put the products into the car, without having to take the products out of the trolley one by one, and once we have arrived home, to carry them into our kitchen or storage place of the purchased items, being this the main objective of the present invention, given that, on behalf of the solicitor, the existence of another trolley or cart that presents any technical, structural or configuration characteristics that make this possible is unknown.

### EXPLANATION OF THE INVENTION

Thus the collapsible cart, applicable for the transportation of shopping from shop to car and from car to home, that the present invention proposes, is configured as an outstanding novelty within its field of application, given that said cart satisfactorily achieves the objectives pointed out as ideal, and the characteristic details that make this possible are adequately laid out in the claims that accompany the present descriptive memory.

To be precise, the recommended cart is manufactured with very light and resistant materials and its handling, mounting and folding are of great simplicity, which makes it apt for all ages and in the most adverse of circumstances. It has mechanisms which allow height adjustment at will, with the object of adapting itself to the different heights of the users as well as to the boot of the vehicle that these consumers will use.

The cart, according to the invention, comprises a foldable lower tubular structure, preferably metallic, that once folded, occupies minimum space and is very light, to which a container with handles is attached with great ease on the upper part, and which is divided into different compartments in its interior so as to allow the orderly placing of the different articles purchased.

This container can be of different sizes, in function of the necessities in each case, and be made in any adequate material, with the advantageous possibility of choice of use with or without the metallic structure, in the case of, for example, the prevision of a large volume purchase.

In this way, for larger scale purchases, given the versatility of the proposed cart, the availability of more than one container is also possible, where they can be exchanged at the point of sale and later at home, with a sole metallic structure.

This structure, which logically has wheels for ease of transportation, also counts with means which allow the transportation of the container from said structure into the vehicle's interior and vice-versa with great comfort and ease, as it also has guides in the form of rails and ramps, apt for the small rollers incorporated in the container.

In conclusion, the described cart allows the possibility of being able to place the articles directly into the container, the extraction of said container from the cart and the placing of it into the car via the ramp system, adapted at the height of the boot, and then to fold and store the cart.

In this way, it also allows the inverse of the same operation to be carried out with ease having arrived at the closest parking space to the user's home, with which it may be affirmed that the articles purchased at the point of sale can be unloaded directly into the kitchen of the user's home, thus advantageously making contaminating plastic bags unnecessary and avoiding troublesome carrying and transport of said bags individually with this new system.

The new collapsible cart, applicable for the transportation of shopping from the shop to the car and from car to home represents, therefore, an innovative structure of constructural and constitutive characteristics unknown until the present to this end, reasons which together with its practical use, lend it sufficient grounds to obtain the privilege of exclusivity which is solicited.

### DESCRIPTION OF THE DIAGRAMS

In order to complement the description which is being carried out and with the aim of helping to understand the characteristics of the invention more fully, a set of diagrams in the present descriptive memory, as an integrated part of the same in an illustrative and non-limited manner, represent the following:
Figure number 1- Shows a side view of a collapsible cart example, object of the invention, in which the main parts and elements that form part of it can be appreciated, as well as their configuration and disposition.
Figure number 2- Shows a perspective view of the lower tubular structure of the cart of the invention, where the comprising elements that possibilitate its function can be appreciated.
Figure number 3- Shows a side view of the structure in the folded position, where the little space it occupies can be appreciated.
   Figure number 4- Shows a schematic representation of the different positions that the cart can adopt in order to change its height.

### PREFERENTIAL MANUFACTURE OF THE INVENTION

On view of the figures mentioned, and according to the numbering system adopted, a preferential manufacture of the invention can be observed, which comprises the indicated parts and elements which are shown and described as follow.

Therefore, as can be appreciated in said diagrams, the collapsible cart (1) in question is essentially configured from a lower tubular structure (2) on which a container is attached (3), with said structure (2) being made in any material, preferably metallic, adequately resistant and light, and the container (3) in any material (metallic, plastic or others) adequately apt for the use intended, similarly light and resistant.

Said structure (2) comprises parallel guiding bars characterised by a U-shaped configuration in a manner so as to form guides (4) apt for the rollers (5) to run along them, which are housed inside the container (3), where both ramps' (6) dimensions and configuration are foreseen to be adequate for coupling to the corresponding ends of said guides (4), whether it be provisionally in the moment of deciding its use or in a permanent manner by fixing it, in an adequately foldable way, to the structure (2), through which the advantageous and easy operation of putting in and taking out the container (3) from the car to the structure (2) and vice-versa may be carried out.

Due to their opposed extremes, said guides (4) comprise, at least one of them, of a fixing element, such as a hook (7), with the task of adequately holding the container (3) in place (3) within the structure (2), the rollers (5) which will also dispose of a braking system.

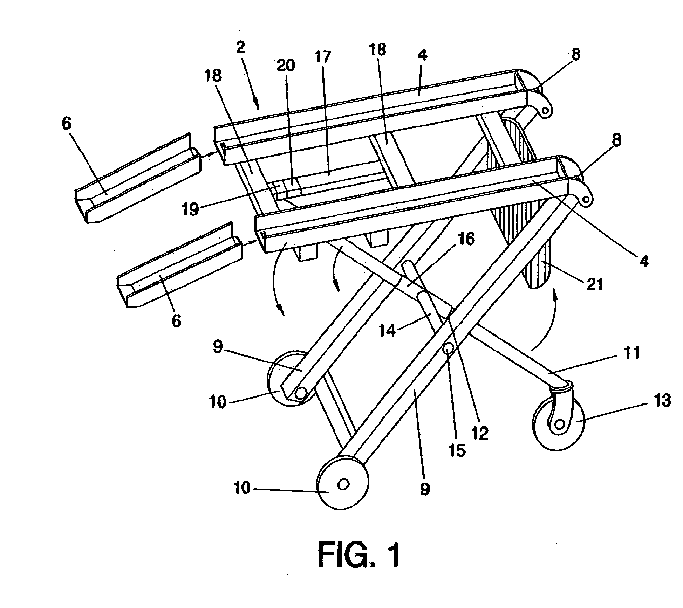

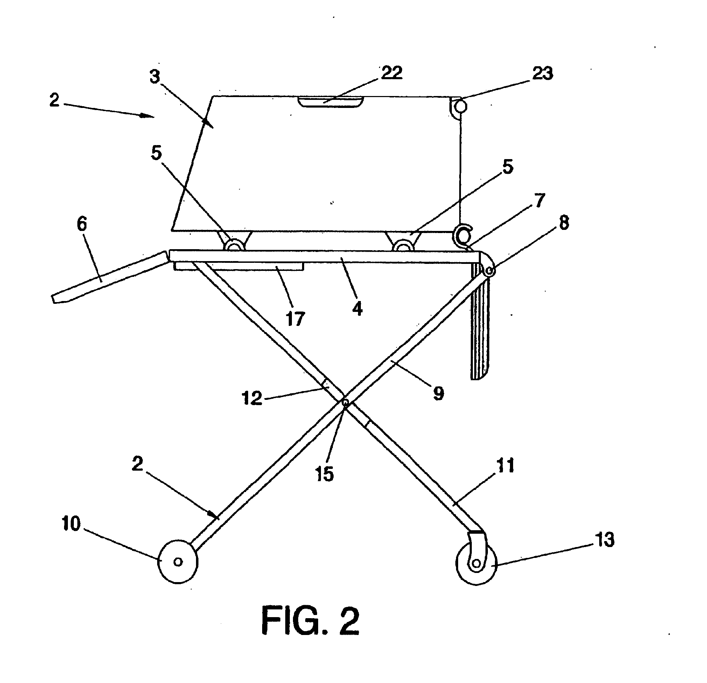

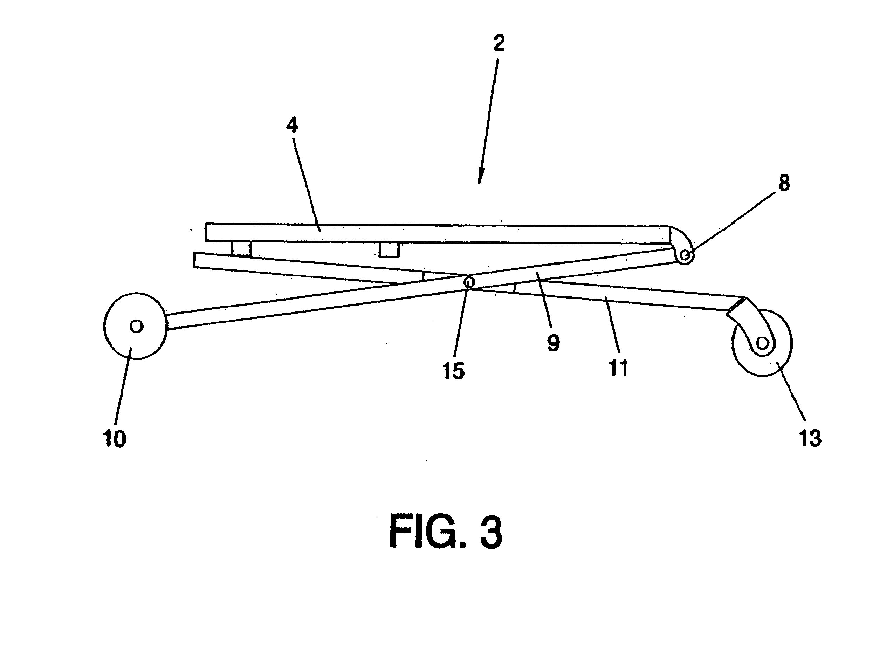

The guides (4) also present respective articulated joints (8) in said extremes which connect them to both side legs (9), which, provided with their corresponding wheels (10) in the lower part, and together with a third middle leg (11), articulately joined to them, via a piece (12) provided in its centre with a wheel (13) at its lower end, form the collapsible base of the cart (1), which, as can be appreciated in figure 3, occupies a minimal space in its folded position.

Said part (12), which articulately joins the side legs (9) to the middle leg (11), adopt a cross-shaped configuration, comprising a horizontal tubular piece (14), through which an axle (15) passes, which is the piece that in its centre part joins the two side legs (9) and the middle leg (11), and another tubular piece (16), which in turn is solidly and perpendicularly connected to the horizontal piece (14) that the middle leg (11) passes through, in such a way so as to assure that said joint is adequately reinforced.

It must also be added that, in order to handle the cart (1) with ease, the side legs'(9) wheels (10) are fixed, while the central leg's (11) wheel (13) turns freely, allowing to be advantageously directed from one side to the other, as desired.

On the other hand, the central leg (11) has a longitudinal bar (17) situated at its highest end between the described guides (4) which are joined to them via respective crosspieces (18).

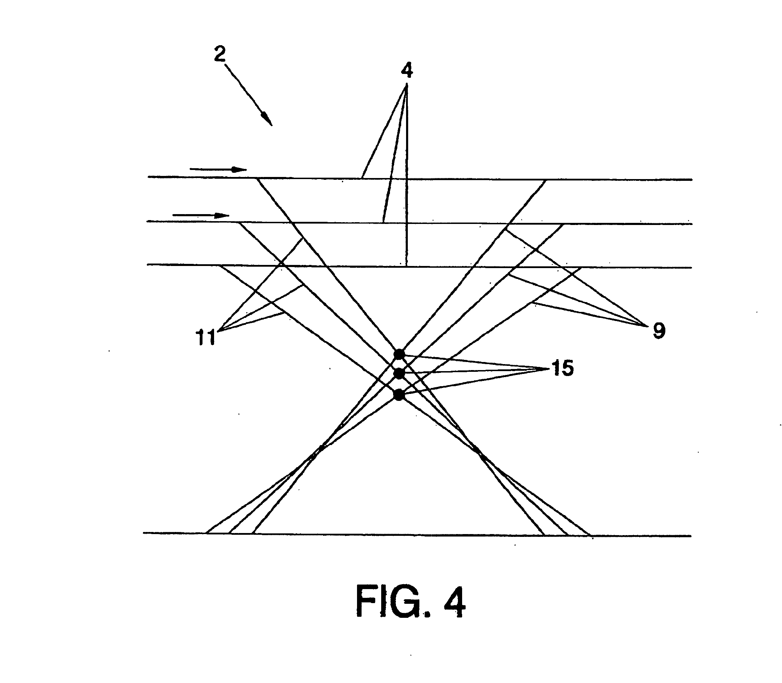

Said joint of the central leg (11) with the bar (17) is made via a sliding piece (19) which allows the adjusting of the cart's height as necessary, with a series of notches (20) in the bar (17) to this effect, which will fix the piece (19) in various predetermined positions, as can be observed in figure 4.

Finally, it must be mentioned that the structure (2) foresees the incorporation of an additional bag (21) fixed on one of its sides through a conventional system.

It should also be mentioned that the container (3) has two side handles (22) designed for its ease of handling in an independent manner, as well as a front handle (23) intended for ease of use of the cart (1) on the whole, which as previously commented can be managed from one end or the other.

Having sufficiently described the nature of the present invention, as well as the way of putting it into practice, it is not deemed necessary that its explanation be made more extensive so that any expert on the matter may understand its potential and the advantages that are derived from it, thereby stating that within its essentiality, it may be put into practice in other ways that may differ in detail from that indicated as an example, and which will reach the protection herein described as long as its main fundamental principle is neither altered, changed nor modified.

## Claims

1. COLLAPSIBLE CART, APPLICABLE FOR TRANSPORTING SHOPPING FROM THE SHOP TO THE CAR AND FROM THE CAR TO THE HOME, is **characterised by** the fact of comprising a lower tubular structure (2) on which a container is attached (3), with said structure (2) being made in any material, preferably metallic, adequately resistant and light, and the container (3) in any material (metallic, plastic or others) adequately apt for the use intended, similarly light and resistant; in which the structure (2) comprises two parallel guiding bars **characterised by** a U-shaped configuration in a manner so as to form guides (4) apt for the rollers (5) to run along them, which are housed inside the container (3), present respective articulated joints (8) which connect them to both side legs (9) which, provided with their corresponding wheels (10) in the lower part, together with a third middle leg (11), articulately joined to them, via a piece (12) provided in its centre with a wheel (13) at its lower end, form the collapsible base of the cart (1), with the central leg (11) united to a longitudinal bar at its highest point, situated between the described guides (4) which is joined to them by their respective crosspieces (18).

2. COLLAPSIBLE CART, APPLICABLE FOR TRANSPORTING SHOPPING FROM THE SHOP TO THE CAR AND FROM THE CAR TO THE HOME, according to claim 1, is **characterised by** having both ramps (6), of adequate sizes and dimensions in order to be affixed to the corresponding guides' (4) ends whether in a temporary manner or permanently via their fixing to the structure (2), in an adequately collapsible or folding fashion, for ease of operation when placing or extracting the container (3) to and from the structure (2) and vice versa.

3. COLLAPSIBLE CART, APPLICABLE FOR TRANSPORTING SHOPPING FROM THE SHOP TO THE CAR AND FROM THE CAR TO THE HOME, according to claims 1 and 2, is **characterised by** the fact that the guides (4) or at least one of them, has a fixed hook-like element (7), whose purpose is that of allowing the container (3) to be fixed to the structure (2) in an adequate fashion; and because the container's rollers (5) have a braking system.

4. COLLAPSIBLE CART, APPLICABLE FOR TRANSPORTING SHOPPING FROM THE SHOP TO THE CAR AND FROM THE CAR TO THE HOME, according to claims 1 to 3 is **characterised by** the fact that the piece (12), which articulately connects the side legs (9) with the central leg (11), adopting a cross-shaped configuration, comprising a horizontal tubular piece (14), which has an axle (15) passing through it (15) and is connected in its centre to the two side legs (9) and central leg (11), and another tubular piece (16), solidly and perpendicularly joined to the horizontal piece (14), through which the central leg passes (11).

5. COLLAPSIBLE CART, APPLICABLE FOR TRANSPORTING SHOPPING FROM THE SHOP TO THE CAR AND FROM THE CAR TO THE HOME, according to claims 1 to 4, is **characterised by** the fact that the side legs' (9) wheels (10) are fixed, and the central leg's (11) wheel (13) turns freely, allowing the cart to be directed from one side to the other, as desired.

6. COLLAPSIBLE CART, APPLICABLE FOR TRANSPORTING SHOPPING FROM THE SHOP TO THE CAR AND FROM THE CAR TO THE HOME, according to claims 1 to 5, is **characterised by** the fact that the joint of the central leg (11) with the bar (17) is via a sliding piece (19) that allows the adjustment of the cart as required, with a series of notches (20) in the bar (17) to this effect, which will fix the piece (19) in various predetermined positions.

7. COLLAPSIBLE CART, APPLICABLE FOR TRANSPORTING SHOPPING FROM THE SHOP TO THE CAR AND FROM THE CAR TO THE HOME, according to claims 1 to 6, is **characterised by** the fact that the structure (2) foresees the incorporation of an additional bag (21) conventionally attached to one of its sides.

8. COLLAPSIBLE CART, APPLICABLE FOR TRANSPORTING SHOPPING FROM THE SHOP TO THE CAR AND FROM THE CAR TO THE HOME, according to claims 1 to 7, is **characterised by** the fact that the container (3) has two side handles (22) designed for its ease of handling in an independent manner, as well as a front handle (23) intended for ease of use of the cart (1) on the whole.

## Amended claims

### Amended claims under Art. 19.1 PCT

1. COLLAPSIBLE CART, APPLICABLE FOR TRANSPORTING SHOPPING FROM THE SHOP TO THE CAR AND FROM THE CAR TO THE HOME, of the type that comprises a lower tubular structure (2) on which a container (3) is attached. Said structure (2) is made in any material, preferably metallic, adequately resistant and light, and the container (3) in any material (metallic, plastic or others) adequately apt for the use for which it is intended, similarly light and resistant, **characterised by** the fact that the structure (2) comprises two parallel U-shaped sections which constitute guides (4) apt for the housing of the rollers (5) which are in the lower part of the container (3), the guiding bars (4) presenting respective articulated attachment points (8) at their ends, which connect them to both side legs (9), which, provided with their corresponding wheels (10) in the lower part, together with a third middle leg (11), articulately joined to them, via a piece (12) provided in its centre with a wheel (13) at its lower end, form the collapsible base of the cart (1), with the upper part of the central leg (11), connected to a longitudinal bar (17), situated between the described guiding bars (4), which in turn is joined to them by their respective crosspieces (18); and that the joint of the central leg (11) with the bar (17) is made via a sliding piece (19) which allows the height of the cart to be adjusted as required with a series of notches (20) in the bar (17) to this effect, which will fix the piece (19) in various predetermined positions.

2. COLLAPSIBLE CART, APPLICABLE FOR TRANSPORTING SHOPPING FROM THE SHOP TO THE CAR AND FROM THE CAR TO THE HOME, according to claim 1, **characterised by** having both ramps (6), of adequate sizes and dimensions in order to be affixed to the corresponding guides' (4) ends whether in a temporary manner or permanently via their fixing to the structure (2), in an adequately collapsible or folding fashion, for ease of operation when placing or extracting the container (3) to and from the structure (2) and vice-versa.

3. COLLAPSIBLE CART, APPLICABLE FOR TRANSPORTING SHOPPING FROM THE SHOP TO THE CAR AND FROM THE CAR TO THE HOME, according to claims 1 and 2, **characterised by** the fact that the guides (4) or at least one of them, has a fixed hook-like element (7), whose purpose is that of allowing the container (3) to be fixed to the structure (2) in an adequate fashion; and because the container's rollers (5) have a braking system.

4. COLLAPSIBLE CART, APPLICABLE FOR TRANSPORTING SHOPPING FROM THE SHOP TO THE CAR AND FROM THE CAR TO THE HOME, according to claims 1 to 3 is **characterised by** the fact that the piece (12), which articulately connects the side legs (9) with the central leg (11), adopting a cross-shaped configuration, comprising a horizontal tubular piece (14), which has an axle (15) passing through it (15) and is connected in its centre to the two side legs (9) and central leg (11), and another tubular piece (16), solidly and perpendicularly joined to the horizontal piece (14), through which the central leg (11) passes.

5. COLLAPSIBLE CART, APPLICABLE FOR TRANSPORTING SHOPPING FROM THE SHOP TO THE CAR AND FROM THE CAR TO THE HOME, according to claims 1 to 4, is **characterised by** the fact that the side legs' (9) wheels (10) are fixed, and the central leg's (11) wheel (13) turns freely, allowing the cart to be directed from one side to the other, as desired.

6. COLLAPSIBLE CART, APPLICABLE FOR TRANSPORTING SHOPPING FROM THE SHOP TO THE CAR AND FROM THE CAR TO THE HOME, according to claims 1 to 5, is **characterised by** the fact that the structure (2) foresees the incorporation of an additional bag (21) attached to one of its sides in a conventional manner.

7. COLLAPSIBLE CART, APPLICABLE FOR TRANSPORTING SHOPPING FROM THE SHOP TO THE CAR AND FROM THE CAR TO THE HOME, according to claims 1 to 6, is **characterised by** the fact that the container (3) comprises two side handles (22) designed for its ease of handling in an independent manner, as well as a front handle (23) intended for ease of use of the cart (1) on the whole.
